# EUROPEAN PATENT SPECIFICATION

(11) **EP 3 910 172 B1**
(45) Date of publication and mention of the grant of the patent: **13.03.2024**
(21) Application number: 21173468.6
(22) Date of filing: 12.05.2021
(51) Int. Cl.: F02B 33/06, F01L 9/16

(54) **BOOSTED INTERNAL COMBUSTION ENGINE PROVIDED WITH VALVE ACTUATION SYSTEM**
AUFGELADENE BRENNKRAFTMASCHINE MIT VENTILBETÄTIGUNGSSYSTEM
MOTEUR À COMBUSTION INTERNE ALIMENTÉ MUNI D'UN SYSTÈME DE COMMANDE DE SOUPAPES

(30) Priority: 14.05.2020 IT 202000011080
(43) Date of publication of application: 17.11.2021
(73) Proprietor: FPT Motorenforschung AG, 9320 Arbon (CH)
(72) Inventor: FESSLER, Harald, 9320 Arbon (CH)
(74) Representative: Fiume, Orazio

(56) References cited:
- WO-A1-2009/023080
- WO-A1-2010/129872
- DE-A1-102013 209 041
- FR-A1- 3 021 347

## Description

### Field of the invention

The present invention relates to a valve actuation system implemented in a boosted internal combustion engine.

### Description of the prior art

When the pressure generated by the boost of an internal combustion engine is relatively high, namely constantly over the ambient pressure, as usual the camshaft leads to drawbacks. In order to maintain the intake valve(s) closed, strong spring(s) should be implemented to avoid unwanted valve(s) opening. This implies high friction at the camshaft. The high frictions lead to high parasitic torque.

DE 10 2013 209041 A1 describes a valve device, such as an inlet valve or outlet valve for a cylinder of an internal combustion engine having an air conveying module, which comprises a pneumatically controllable air valve for supplying fresh air to a combustion chamber of the engine.

WO 2009/023080 A1 describes a split-cycle engine having a balanced valve assembly used as one of a crossover compression valve and a crossover expansion valve in a crossover passage, and a balance piston which balances the fluid pressures acting against the valve.

### Summary of the invention

The main object of the present invention to provide a valve actuation system suitable for those implementations where the pressure at the intake manifold is relatively high, irrespective to the nature of the boost source.

The main principle of the invention is implement a pneumatically actuated valve exploiting exclusively the intake pressure.

According to the present invention, the valve stem is physically connected to a mobile piston suitable to move in a relating cylinder defining at least one closed chamber interposed between the valve and the mobile piston. The valve has a first face exposed into intake manifold and a second face, opposite to the first face exposed into a corresponding combustion chamber.

The first chamber is directly connected to the intake manifold through a throttled pressurization channel and is connected to a relative low-pressure sink, such as environment or crank case or a low pressure tank though a valve, suitable to permit a venting flow, higher than the pressurizing flow through the throttled channel.

The throttled pressurization channel could be directly connected with the supercharging device.

A spring is arranged in the first chamber to force the valve into close position.

The valve condition is function of
- The pressure in the engine combustion chamber,
- The pressure in the intake manifold,
- The spring force,
- The pressure in the first chamber

The pressure in the first chamber is mainly function of the (solenoid) valve condition, due to the ratio between pressurizing and venting flows. Indeed, being the first camera connected with the intake manifold and arranged in such a way to cooperate with the spring towards the closing of the intake valve, the opening of the solenoid valve leads to the immediate depressurization of the first chamber. Thus, the spring force is not enough to maintain the valve closed under the pressure in the intake manifold.

It should be noted that the pneumatic actuator is never connected with the combustion chamber at all.

According to a first embodiment of the invention, valve is actuated fixedly by a control disk, thus the valve could be fully mechanic or could be an electro-actuated valve such as a fast solenoid valve fixedly controlled according to the angle position of the crankshaft.

According to another embodiment of the invention, the solenoid valve is actuated according to the specific variable maps, stored in an electronic unit, such that to realize a variable valve actuation.

Advantageously, the present valve actuation system is capable to exploit the boost pressure as power source without an addition power source such as the usual timing belt/chain. The combustion chamber above mentioned belongs to an only-in-one 4-stroke engine or to a split cycle engine.

With "only-in-one 4-stroke engine" it is meant an engine with at least one cylinder capable to develop 4 strokes, generally within 720° of crankshaft rotation.

The Split cycle engine, instead, has cylinders dedicated to a subset of the strokes. Usually the combustion cylinder executes only combustion/expansion and exhaust, while the boost (or compression) cylinder executes intake and compression. This means that a spit cycle engine does not requires two complete revolutions (720°) to execute the four strokes of the entire thermodynamic cycle, which can be executed in just one complete crankshaft rotation due to the splitting of the thermodynamic cycle over the two subsets of cylinders.

It is clear that, the boost source, in case of only-in-one 4-stroke engine should be capable to pressurize the intake manifold adequately even at the engine start. This capability can be easily realized in the pneumatically-actuated brake vehicles, such as trucks, public transportation and agricultural vehicles due to their pneumatic circuits that can be connected to the engine to feed the latter at start. Nevertheless, even a car with an only-one-4-stroke engine can be easily provided with a compressed air reservoir arranged to actuate the valve actuation system. The VA system might work even without additional boost at cold start, since the poppet valve, in such conditions acts as a non-return valve.

Low boost values, known from traditional Petrol and Diesel engines, will limit the engine valve dynamics, since forces are small. In contrast, a split cycle engine needs anyway boost to start. Such boost is "automatically" produced by the compression piston as known. The present invention finds its better implementation in those cases where the boost reaches high pressures, beyond 10 bars and especially in the split cycle engines. Indeed, if the valve spring forcing the valve closing is not sufficiently strong, the intake valve might behave like a check valve when the boost pressure is low, according to the pressure difference between intake pressure and combustion cylinder pressure. On the other side, increasing spring stiffness leads to friction increase.

In contrast, in case of split cycle engine implementation, the high boost will open the intake valve during the exhaust stroke, if it is not balanced by the mobile piston herein described.

Therefore, the present invention seems to solve a problem, which increases with higher boost pressure, by implementing a balancing mobile piston in conjunction with a venting valve and a low pressure sink, to control valve opening and closing.

It should be understood that the present solution does not implement any rocker arms or the like, being fully actuated pneumatically.

The split cycle engine uses a compression and a combustion cylinder. In front of the combustion cylinder, the pressure could reach peaks of 70 bar, with a minimum pressure of about 20bar.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows schematically a first example of high pressure boosted internal combustion engine provided with variable valve actuation according to the present invention;
- Fig. 2 shows a second example based on the example of figure 1.

The same reference numerals and letters in the figures designate the same components or functionally equivalent parts.

According to the present invention, the term "second element" does not imply the presence of a "first element", first, second, etc.. are used only for improving the clarity of the description and they should not be interpreted in a limiting way.

### Detailed description of the preferred embodiments

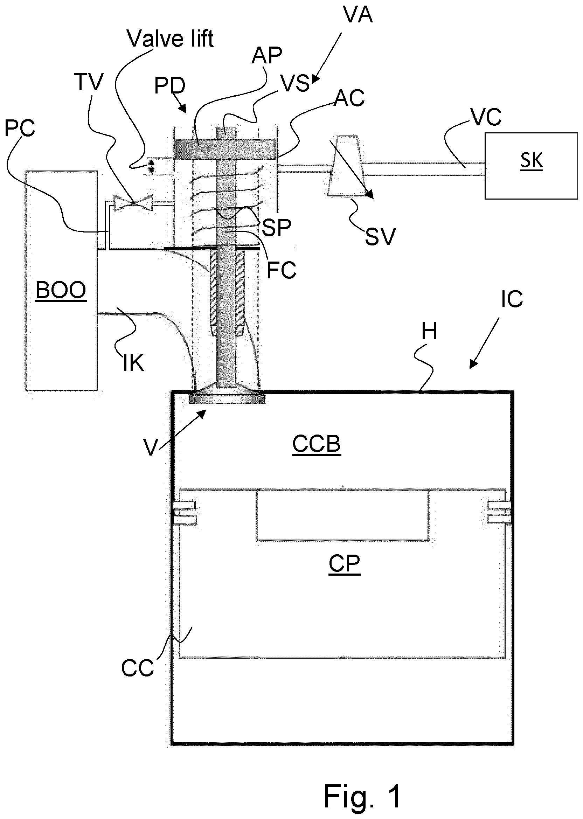

Figure 1 discloses a combustion piston CP operatively associated with a combustion cylinder CC by defining an internal combustion engine IC. The combustion engine IC is provided with a cylinder head H arranged to close the cylinder and at least to cooperate to define a combustion chamber CCB.

An intake poppet valve V is disclosed. The intake valve is arranged in order to communicate or seal the intake with the combustion chamber CCB.

In a close position, the valve is biased on its corresponding seat defined in the head H, while in the open position, the valve protrudes in the combustion chamber CCB in a known fashion.

The valve has a first face exposed into intake manifold and a second face, opposite to the first face exposed into a corresponding combustion chamber.

The valve V has a stem VS suitable to slide in a corresponding seat as known to the skilled person.

A boost source BOO supplies the intake manifold with compressed air.

Preferably, the valve stem VS is physically connected with a movable piston AP of a pneumatic actuator PD.

The pneumatic actuator defines at least a first chamber FC interposed between the piston AP and the valve V. This means that the pressurization of the first chamber leads towards valve close position.

Preferably, a metallic spring SP is arranged in the first chamber in order to cooperate with the pressurization of the first chamber to achieve the valve closing, especially when the engine is stopped and the intake manifold is not pressurized, such that to avoid the valve falls in the combustion chamber CCB. Therefore, the spring can be sized to exert a force strictly needed to maintain the valve closed when the engine is off.

The movable piston AP has a first face exposed in the first chamber.

The first chamber communicates with the intake through a pressurization channel PC arranged to throttle the pressurization flow from the intake to the first chamber.

The first chamber communicates with a low pressure sink SK such as exhaust, environment or crank case LP or any vacuum reservoir, through a venting channel VC, where a fast solenoid valve SV is arranged in order to control the venting operation.

The sink can be at a stable low pressure, such as exhaust, ambient pressure or crank case pressure or can be at lower pressure than the environmental pressure, at least during solenoid valve opening. For a preferred implementation in the split cycle engine field, it makes sense to vent the flow of the control valve (SV) to the turbine inlet, when the engine is turbo-charged, in order to get some benefit of the pressurized gas.

For example, in certain vehicle a vacuum pump is arranged for certain aims. Such vacuum can define the low pressure sink. It is clear that even in case the intake manifold is under the ambient pressure, its boost pressure is relatively high in respect of the low pressure sink.

In addition, in the Otto engines, the throttle can be avoided so as to determine the cylinder charging through the valve actuation VA.

This means that when solenoid valve SV opens, the first chamber is almost immediately vented. This means also that pressurization flow, through PC, is lower that the venting flow.

The quickness of pressurization and venting of the first chamber depends on
- the ratio between pressurization flow and venting flow (flow area ratio) and
- the ratio between boost pressure and sink pressure.

In addition, the operating surface of the movable piston AP is at least slightly larger than the first face of the valve. This means that, when the first chamber is pressurized, the valve tends to close.

According to a preferred embodiment of the invention, the operating surface of the movable piston AP is large enough with respect to the first face surface of the valve, such that the valve remains closed even under the combustion piston sucking effect and boost pressure.

In this context, the metal spring can be useful to help the movable piston AP to maintain closed the valve V and also during dynamic conditions.

When the first chamber is vented through the valve SV, the sucking effect of the combustion piston and the boost pressure open quickly the valve, by permitting the filling of the combustion chamber with a fresh charge.

Without pressurizing the first chamber, during compression phase, the valve remains open at least till pressure in the combustion chamber is lower or equal to the boost pressure. The metal spring can help to compensate the pressurization dynamic. Indeed, the pressurization channel is throttled in order to render as fast as possible venting of the first chamber. However, during valve closing, the pressurization is slower than venting operation, thus metal spring can render slightly faster the closing operation.

In addition, the compression stroke before combustion, helps to close automatically the valve, thus the pressure increase in the combustion chamber cooperates with the spring preload and the first chamber pressurization in closing the valve. It is clear, that an exhaust valve, connected to the combustion chamber CCB is not disclosed in the drawings, but it is implicitly present.

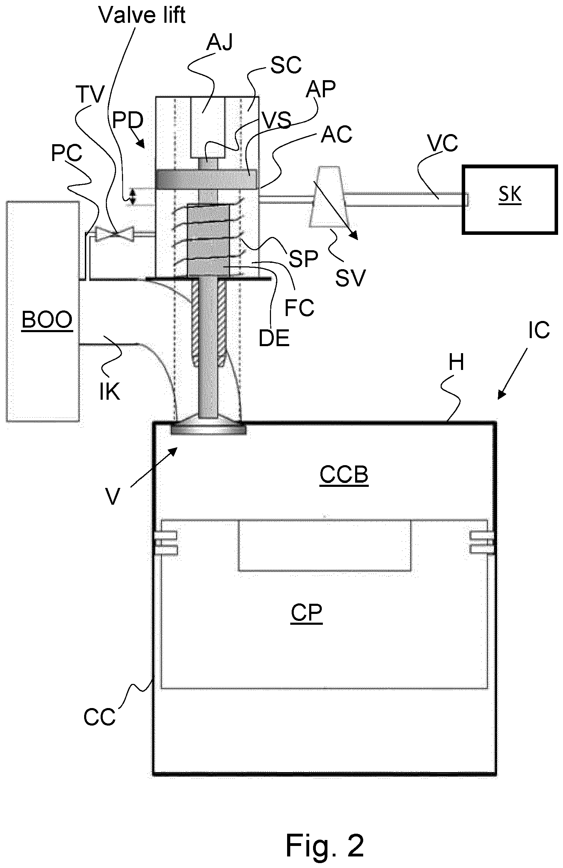

According to a first embodiment of the invention, the solenoid valve is controlled fixedly according to the angle of the crankshaft. Alternatively, the solenoid valve is controlled in order to vary the valve actuation according to several known parameters, such as engine speed, torque, and so on or in order to actuate an engine brake operation. According to another preferred embodiment of the invention that can be combine with any of the previous embodiments, the pneumatic actuator can comprise a second chamber arranged oppositely to the first chamber, such that the piston AP exposes a second face opposite to the first face. According to this embodiment, the second chamber SC disclosed on figure 2, is operatively connected with the exhaust preferably immediately upstream or downstream of turbine of a turbo-charger or turbo-compound or with the crank case. Preferably, also the venting channel VC is connected with the exhaust or crankcase.

Such pressure is operatively transmitted to the second chamber through a secondary channel (not disclosed), so that such pressure cooperates with the intake pressure developed on the first face of the valve and the sucking effect of the combustion piston CP.

Therefore, the valve condition is function of
- The pressure in the engine combustion chamber,
- The pressure in the intake manifold,
- The spring force,
- The pressure in the first chamber
- The Pressure in second chamber (above the mobile piston).

Preferably, both the second chamber and the venting channel are operatively connected with the crankcase, which defines the above mentioned sink SK.

Preferably, within the first chamber a dumping element DE is arranged to define the end position of the valve in fully open position. The lift could be alternative controlled, if the venting channel is block by the movable piston at a defined lift by achieving a self-controlling effect.

The valve displacement is indicated by the label "Valve lift" in the drawings.

Preferably, the free end of the valve stem or the face of the movable piston AP, arranged at the opposite side with respect to the first chamber, contacts a self-adjusting valve catch AJ. Such device expands, for example, under engine oil pressure, by avoiding a strong impact of the valve with its respective seat, but without interfering with the completely closing of the valve itself.

According to a further preferred embodiment of the invention, the threated pressurizing channel is realized through the stem guide in such a way to interconnect the intake IK and the first chamber FC by achieving the effects above disclosed.

Example embodiments are provided so that this disclosure will be thorough, and will fully convey the teaching to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms. In some example embodiments, well known processes, well-known device structures, and well known technologies are not described in detail.

## Claims

1. Boosted internal combustion engine (IC) provided with valve actuation system (VA), the combustion engine comprising at least a combustion piston (CP) reciprocating a corresponding combustion cylinder (CC) closed by a head (H) to define a combustion chamber (CCB), wherein in the head a poppet valve (V) is arranged in such a way to open protruding in the combustion chamber and to close against a corresponding head seat, the valve communicating the combustion chamber with an intake, the actuation system (VA) including a pneumatic actuator (PD) comprising
- a piston (AP) operatively connected with the stem (VS) of the poppet valve (V),
- at least a first chamber (FC) where the piston (AP) is movable in such a way the first chamber is between the poppet valve and the piston (AP),
- a spring (SP) arranged to expand the first chamber,
Wherein the first chamber is fluidly connected with
- the intake manifold through a pressurization throttled channel (PC) and
- a pressure sink (SK), which is at a pressure constantly under the intake one at least during first chamber venting, through a controllable valve (SV).

2. Engine according to claim 1, wherein the controllable valve (SV) consists of a fully mechanical valve or an electro-actuated valve, such as a fast solenoid valve.

3. Engine according to claim 2, further comprising a control unit arranged to control the fast solenoid valve in order to realize a variable valve actuation.

4. Engine according to any one of previous claims 1-3, wherein said poppet valve (V) has a first face exposed into the intake manifold and wherein the surface of said first face is lower than a first face of the piston (AP) exposed in the first chamber.

5. Engine according to any one of previous claims 1-4, wherein the pneumatic actuator includes a second chamber (SC) arranged oppositely to the first chamber, wherein the second chamber is fluidly connected with said pressure sink (SK) .

6. Engine according to any one of the previous claims 1-5, wherein said pressure sink (SK) is one among:
- external environment,
- exhaust of the engine,
- crankcase,
- vacuum pump.

7. Engine according to claim 5, further comprising a turbine operatively arranged on the exhaust of the engine and wherein said sink consists in a point immediately upstream or downstream of the turbine.

8. Engine according to any one of the previous claims 1 - 7, further comprising a damper element (DE) arranged to dampen poppet valve opening, preferably arranged within said first chamber.

9. Engine according to any one of the previous claims 1 - 8, further comprising a self-adjusting valve catch (AJ) arranged to dump poppet valve closing.

10. Engine according to any one of the previous claims, wherein said combustion cylinder is arranged to develop 4-strokes of an Otto or Diesel internal combustion engine.

11. Engine according to any one of the previous claims, further comprising a compression cylinder arranged to pressurize said intake manifold defining a split-cycle combustion engine.

## Patentansprüche

1. Verstärkter Verbrennungsmotor (IC), ausgestattet mit einem Ventilbetätigungssystem (VA), wobei der Verbrennungsmotor mindestens einen Verbrennungskolben (CP) umfasst, der einen entsprechenden Verbrennungszylinder (CC) hin-und her-bewegt, der durch einen Kopf (H) verschlossen ist, um eine Verbrennungskammer (CCB) zu definieren, wobei im Kopf ein Tellerventil (V) so angeordnet ist, dass es in die Brennkammer hineinragt und gegen einen entsprechenden Kopfsitz schließt, wobei das Ventil die Brennkammer mit einem Einlass verbindet, wobei das Betätigungssystem (VA) einen pneumatischen Aktuator (PD) umfasst, der
- mit einen Kolben (AP) ausgestattet ist, der mit dem Schaft (VS) des Tellerventils (V) wirkverbunden ist,
- mindestens eine erste Kammer (FC) aufweist, in der der Kolben (AP) so beweglich ist, dass sich die erste Kammer zwischen dem Tellerventil und dem Kolben (AP) befindet,
- eine Feder (SP) aufweist, die so angeordnet ist, dass sie die erste Kammer ausdehnt, wobei die erste Kammer
- in Fluidverbindung mit dem Ansaugkrümmer durch einen druckgedrosselten Kanal (PC) steht und
- eine Drucksenke (SK) aufweist, die über ein steuerbares Ventil (SV) zumindest während der Entlüftung der ersten Kammer konstant unter dem Ansaugdruck steht.

2. Motor nach Anspruch 1, wobei das steuerbare Ventil (SV) aus einem vollmechanischen Ventil oder einem elektrobetätigten Ventil, beispielsweise einem schnellen Magnetventil, besteht.

3. Motor nach Anspruch 2, der außerdem eine Steuereinheit umfasst, die so angeordnet ist, dass sie das schnelle Magnetventil steuert, um eine variable Ventilbetätigung zu realisieren.

4. Motor nach einem der vorhergehenden Ansprüche 1-3, wobei das Tellerventil (V) eine erste Fläche aufweist, die in den Ansaugkrümmer hineinragt, und wobei die Oberfläche der ersten Fläche tiefer liegt als eine erste Fläche des Kolbens (AP), die in die erste Kammer hineinragt.

5. Motor nach einem der vorhergehenden Ansprüche 1-4, wobei der pneumatische Aktuator eine zweite Kammer (SC) umfasst, die gegenüber der ersten Kammer angeordnet ist, wobei die zweite Kammer mit der Drucksenke (SK) in Fluidverbindung steht.

6. Motor nach einem der vorhergehenden Ansprüche 1-5, wobei die Drucksenke (SK) aus einer den folgenden:
- einer Außenumgebung,
- einem Auslass des Motors,
- einem Kurbelgehäuse,
- einer Vakuumpumpe, besteht.

7. Motor nach Anspruch 5, der außerdem eine Turbine umfasst, die operativ am Auslass des Motors angeordnet ist, und wobei die Senke aus einem Punkt besteht, der unmittelbar stromaufwärts oder stromabwärts der Turbine gelegen ist.

8. Motor nach einem der vorhergehenden Ansprüche 1-7, der außerdem ein Dämpferelement (DE) umfasst, das so angeordnet ist, dass es das Öffnen des Tellerventils dämpft, das vorzugsweise innerhalb der ersten Kammer angeordnet ist.

9. Motor nach einem der vorhergehenden Ansprüche 1-8, der außerdem einen selbsteinstellenden Ventilverschluss (AJ) umfasst, der so angeordnet ist, dass er das Schließen des Tellerventils verhindert.

10. Motor nach einem der vorhergehenden Ansprüche, wobei der Verbrennungszylinder so angeordnet ist, dass er einen Viertaktmotor eines Otto- oder Diesel-Verbrennungsmotors entwickelt.

11. Motor nach einem der vorhergehenden Ansprüche, der außerdem einen Kompressionszylinder umfasst, der so angeordnet ist, dass er den Ansaugkrümmer unter Druck setzt, wodurch ein Split-Cycle-Verbrennungsmotor definiert wird.

## Revendications

1. Moteur à combustion interne suralimenté (IC) pourvu d'un système d'actionnement de vannes (VA), le moteur à combustion comprenant au moins un piston de combustion (CP) effectuant un mouvement de va-et-vient avec un cylindre de combustion correspondant (CC) fermé par une tête (H) pour définir une chambre de combustion (CCB), dans lequel dans la tête une vanne à clapet (V) est disposée de manière à s'ouvrir en faisant saillie dans la chambre de combustion et à se fermer contre un siège de tête correspondant, la vanne faisant communiquer la chambre de combustion avec une admission, le système d'actionnement (VA) comprenant un actionneur pneumatique (PD) comprenant
- un piston (AP) relié fonctionnellement à la tige (VS) de la vanne à clapet (V),
- au moins une première chambre (FC) dans laquelle le piston (AP) est mobile de telle sorte que la première chambre se trouve entre la vanne à clapet et le piston (AP),
- un ressort (SP) agencé pour dilater la première chambre, la première chambre étant en communication fluidique avec
- le collecteur d'admission à travers une voie étranglée de pressurisation (PC) et
- un puits de pression (SK), qui est constamment à une pression inférieure à celle d'admission au moins pendant la mise à l'air libre de la première chambre, par l'intermédiaire d'une vanne contrôlable (SV).

2. Moteur selon la revendication 1, dans lequel la vanne contrôlable (SV) est constituée d'une vanne entièrement mécanique ou d'une vanne électro-actionnée, telle qu'une électrovanne rapide.

3. Moteur selon la revendication 2, comprenant en outre une unité de commande agencée pour contrôler l'électrovanne rapide afin de réaliser un actionnement variable de la vanne.

4. Moteur selon l'une quelconque des revendications précédentes 1 à 3, dans lequel ladite vanne à clapet (V) a une première face exposée dans le collecteur d'admission et dans lequel la surface de ladite première face est inférieure à une première face du piston (AP) exposée dans la première chambre.

5. Moteur selon l'une quelconque des revendications précédentes 1 à 4, dans lequel l'actionneur pneumatique comprend une deuxième chambre (SC) disposée à l'opposé de la première chambre, dans lequel la deuxième chambre est en communication fluidique avec ledit puits de pression (SK).

6. Moteur selon l'une quelconque des revendications précédentes 1 à 5, dans lequel ledit puits de pression (SK) est l'un parmi:
- l'environnement externe,
- l'échappement du moteur,
- le carter du moteur,
- la pompe à vide.

7. Moteur selon la revendication 5, comprenant en outre une turbine disposée de manière fonctionnelle sur l'échappement du moteur et dans lequel ledit puits consiste en un point immédiatement en amont ou en aval de la turbine.

8. Moteur selon l'une quelconque des revendications précédentes 1 à 7, comprenant en outre un élément amortisseur (DE) agencé pour amortir l'ouverture de la vanne à clapet, de préférence disposé à l'intérieur de ladite première chambre.

9. Moteur selon l'une quelconque des revendications précédentes 1 à 8, comprenant en outre une prise de vanne auto-ajustable (AJ) agencé pour évacuer une fermeture de la vanne à clapet.

10. Moteur selon l'une quelconque des revendications précédentes, dans lequel ledit cylindre de combustion est agencé pour développer les 4 temps d'un moteur à combustion interne Otto ou Diesel.

11. Moteur selon l'une quelconque des revendications précédentes, comprenant en outre un cylindre de compression agencé pour pressuriser ledit collecteur d'admission définissant un moteur à combustion à cycle divisé.
